# EUROPEAN PATENT SPECIFICATION

(11) **EP 4 192 180 B1**
(45) Date of publication and mention of the grant of the patent: **19.02.2025**
(21) Application number: 20947187.9
(22) Date of filing: 31.07.2020
(51) Int. Cl.: H04W 74/0808, H04W 16/14, H04W 36/00, H04W 74/00, H04B 7/06

(54) **METHOD AN DEVICE FOR CHANNEL LISTENING**
VERFAHREN UND VORRICHTUNG ZUR KANALÜBERWACHUNG
PROCÉDÉ ET DISPOSITIF DE SURVEILLANCE DE CANAL

(43) Date of publication of application: 07.06.2023
(73) Proprietor: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Taor, Simon Edward William
(86) International application number: PCT/CN2020/106122
(87) International publication number: WO 2022/021293

(56) References cited:
- EP-A1- 4 175 341
- WO-A1-2019/079500
- CN-A- 106 559 795
- CN-A- 107 888 256
- CN-A- 110 213 804
- US-A1- 2019 230 706
- INTERDIGITAL INC: "On Channel Access Mechanisms", vol. RAN WG1, no. e-Meeting; 20200525 - 20200605, 15 May 2020 (2020-05-15), XP052345679, Retrieved from the Internet <URL:https://ftp.3gpp.org/tsg_ran/WG1_RL1/TSGR1_101-e/Docs/R1-2004300.zip R1-2004300 Channel Access Mechanisms_final.docx> [retrieved on 20200515]
- OPPO: "Views on physical layer procedures for NR-U", 3GPP DRAFT; R1-1803975, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sanya, China; 20180416 - 20180420, 6 April 2018 (2018-04-06), Mobile Competence Centre ; 650, route des Lucioles ; F-06921 Sophia-Antipolis Cedex ; France , XP051413064

## Description

### BACKGROUND OF INVENTION

### Field of Invention

The present disclosure relates to the field of communications and, in particular, to a method and device for channel listening.

### Description of Prior Art

In a New Radio-based access to unlicensed spectrum (NR-U) system, the spectrum used is shared spectrum. The types of channel listening that can be used in communication systems such as NR-U systems that are deployed on a shared spectrum include omnidirectional Listen Before Talk (LBT), directional LBT, and LBT free. However, no scheme is currently available to determine the channel listening type, which affects the communication of NR-U systems on shared spectrum. PCT patent publication No. WO 2019/079500 disclosed channel access procedures for directional systems in unlicensed bands. European patent application No. EP4175341A1 disclosed a terminal receives control information indicating the type of channel access procedure.

### SUMMARY

Embodiments of the present application provide a method and device for channel listening, capable of flexibly selecting the channel listening type to respond to changes in channel usage and improve channel utilization and transmission efficiency. The invention is set out in the appended claims.

In a first aspect, a method of channel listening is provided as set out in claim 1.. Additional features are set out in claims 2 and 3.

In a second aspect, a device for channel listening is provided as set out in claim 4. Additional features are set out in claims 5 and 6.

In an aspect, a computer-readable storage medium is provided for storing a computer program that causes the computer to perform the method in the first aspect described above.

With the above technical solutions, the transmitting device can flexibly select the channel listening type from omnidirectional channel listening, directional channel listening, and channel listening free to respond to changes in channel usage and improve channel utilization and transmission efficiency.

### BRIEF DESCRIPTION OF DRAWINGS

FIG. 1 is a schematic diagram of a communication system architecture applied in an embodiment of the present application.
FIG. 2 is a schematic diagram of omnidirectional LBT provided by an embodiment of the present application.
FIG. 3 is a schematic diagram of directional LBT provided by an embodiment of the present application.
FIG. 4 is a schematic flowchart of a method of channel listening provided according to embodiments of the present application.
FIG. 5 is a schematic diagram of a channel listening provided in accordance with an embodiment of the present application.
FIG. 6 is a schematic diagram of another channel listening type provided in accordance with embodiments of the present application.
FIGS. 7 to 10 are schematic diagrams of control messages carrying indication information provided according to embodiments of the present application, respectively.
FIG. 11 is a schematic block diagram of a device for channel listening provided in accordance with embodiments of the present application.
FIG. 12 is a schematic block diagram of a communication device provided in accordance with embodiments of the present application.
FIG. 13 is a schematic block diagram of a device provided in accordance with embodiments of the present application.
FIG. 14 is a schematic block diagram of a communication system provided in accordance with embodiments of the present application.

### DETAILED DESCRIPTION OF EMBODIMENTS

The technical solutions in the embodiments of the present application will be described below in conjunction with the accompanying drawings in the embodiments of the present application, and it is clear that the embodiments described are a part of the embodiments of the present application, and not all of them.

The technical solutions of the embodiments of the present application can be applied to various communication systems, such as Global System of Mobile communication (GSM) systems, Code Division Multiple Access (CDMA) systems, Wideband Code Division Multiple Access (WCDMA) system, General Packet Radio Service (GPRS), Long Term Evolution (LTE) system, Advanced long term evolution (LTE-A) systems, New Radio (NR) systems, evolutionary systems for NR systems, LTE-based access to unlicensed spectrum (LTE-U) systems, NR-based access to unlicensed spectrum (NR-U) systems, Non-Terrestrial Networks (NTN) system, Universal Mobile Telecommunication System (UMTS), Wireless Local Area Networks (WLAN) system, Wireless Fidelity (WiFi), 5th-Generation (5G) systems, or other communication systems.

Generally speaking, conventional communication systems support a limited number of connections and are easy to implement. However, with the development of communication technology, mobile communication systems will support not only conventional communication, but also, for example, device-to-device (D2D) communication, machine-to-machine (M2M) communication, machine-type communication (MTC), Vehicle to Vehicle (V2V) communication, or Vehicle to everything (V2X) communication, etc., to which the embodiments of the application can also be applied.

Optionally, the communication system in an embodiment of the application can be applied to Carrier Aggregation (CA) scenarios, to Dual Connectivity (DC) scenarios, and to Standalone (SA) deployment scenarios.

Optionally, the communication system in embodiments of the present application may be applied to non-licensed spectrum, wherein the non-licensed spectrum may also be treated as shared spectrum; or, the communication system in embodiments of the present application may also be applied to licensed spectrum, wherein the licensed spectrum may also be treated as non-shared spectrum.

Embodiments of the present application describe individual embodiments in conjunction with network device and terminal device, wherein the terminal device may also be referred to as a User Equipment (UE), access terminal, user unit, user station, mobile station, mobile station, remote station, remote terminal, mobile device, user terminal, terminal, wireless communication device, user agent, or user device.

The terminal device may be a station (STATION, ST) in a WLAN, a cellular phone, a cordless phone, a Session Initiation Protocol (SIP) phone, a Wireless Local Loop (WLL) station, a Personal Digital Assistant (PDA) devices, handheld devices with wireless communication capabilities, computing devices or other processing devices connected to a wireless modem, in-vehicle devices, wearable devices, terminal devices in next-generation communication systems such as NR networks, or in future evolved Public Land Mobile Network (PLMN) network, etc.

In an embodiment of the application, the terminal device can be deployed on land, including indoors or outdoors, handheld, wearable, or vehicle-mounted; deployed on water (e.g., ships, etc.); or in the air (e.g., on aircraft, balloons, satellites, etc.).

In an embodiment of the application, the terminal device can be a cell phone (Mobile Phone), a tablet computer (Pad), a computer with wireless transceiver function, a virtual reality (VR) terminal device, an augmented reality (AR) terminal device, a wireless terminal device in industrial control (industrial control), a wireless terminal device in unmanned driving (self-driving), a wireless terminal device in remote medical (remote medical), a wireless terminal device in smart grid (smart grid), a wireless terminal device in transportation safety, or wireless terminal device in smart city or smart home, etc.

By way of an example rather than a limitation, in the embodiments of the application, the terminal device may also be a wearable device. A wearable device may also be referred to as a wearable smart device, which is a general term for a device that is developed to be worn from daily wearables applied with wearable technology and intelligentization design, such as glasses, gloves, watches, clothing, and shoes. A wearable device is a portable device that can be put directly on the body or integrated into the user's clothing or accessories. A wearable device is not only a hardware device, but also a powerful function with software support as well as data interaction and cloud interaction. Broadly speaking, wearable smart devices include full-featured and large-sized devices that can achieve complete or partial functions without relying on smartphones, such as smartwatches or smart glasses, as well as various types of devices, such as smart bracelets and smart jewelry, which only focus on a certain type of application, such as of physical sign monitoring, and need to be used with other devices, such as smartphones.

In embodiments of the present application, the network device may be a device for communicating with a mobile device, the network device may be an access point (Access Point, AP) in a WLAN, a base station (Base Transceiver Station, BTS) in a GSM or CDMA, or a base station (NodeB, NB) in a WCDMA, and may Evolutional Node B (eNB or eNodeB) in LTE, or relay station or access point, or in-vehicle device, wearable device, and network device or base station (gNB) in NR network or network device in future evolved PLMN network or network device in NTN network, etc.

By way of example and not limitation, in embodiments of the present application, the network device may have mobile characteristics. For example, the network device may be a mobile device. Optionally, the network device may be a satellite or a balloon station. For example, the satellite may be a low earth orbit (LEO) satellite, medium earth orbit (MEO) satellite, geostationary earth orbit (GEO) satellite, high elliptical orbit (HEO) satellite, etc. Optionally, the network device can also be a base station installed on land, water, etc.

In an embodiment of the application, the network device can provide services to cells, and the terminal device communicates with the network device through the transmission resources (e.g., frequency domain resources, or spectrum resources) used by the cells, which can be the cells corresponding to the network device (e.g., base station), and the cells can belong to the macro base station or the base station corresponding to small cells, where the small cells can include: Metro cell, Micro cell, Pico cell, Femto cell, etc. These small cells have the characteristics of small coverage area and low transmitting power, and are suitable for providing high speed data transmission services.

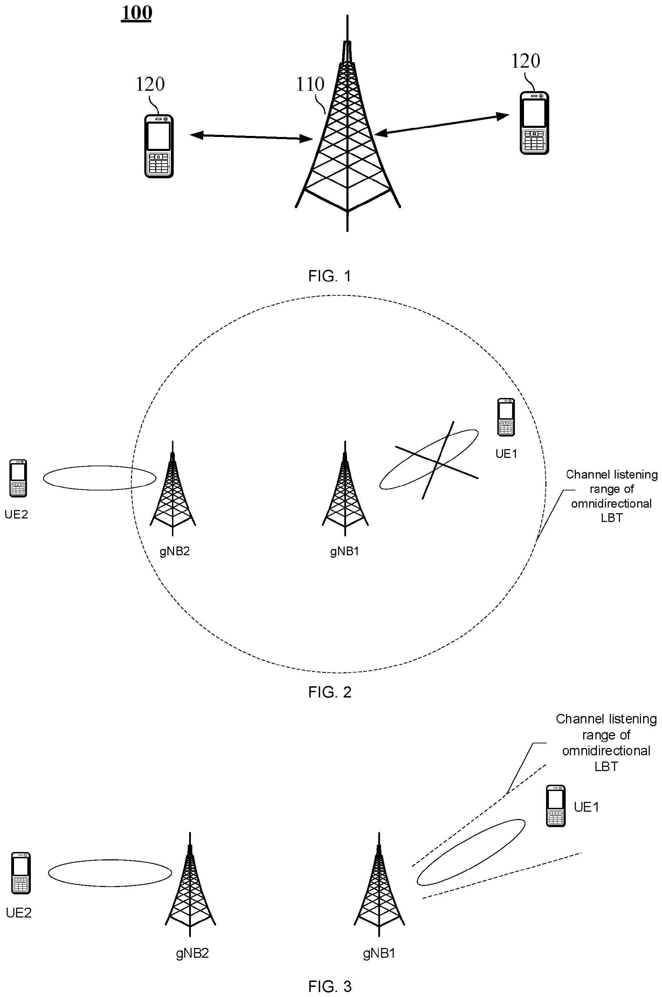

For example, the communication system 100 applied in an embodiment of the application is shown in FIG. 1. The communication system 100 may include a network device 110, and the network device 110 may be a device that communicates with a terminal device 120 (or referred to as a communication terminal, terminal). The network device 110 may provide communication coverage for a specific geographic area and may communicate with terminal devices located within that coverage area.

For example, FIG. 1 illustrates a network device and two terminal devices. Optionally, the communication system 100 may include multiple network devices and the coverage area of each network device may include other numbers of terminal devices, without limitation in an embodiment of the application.

Optionally, the communication system 100 may also include other network entities such as network controllers, mobile management entities, etc., which are not limited by embodiments of the present application.

It should be understood that the devices with communication functions in the network/system in an embodiment of the application may be referred to as communication devices. Taking the communication system 100 illustrated in FIG. 1 as an example, the communication devices may include network devices 110 and terminal devices 120 with communication functions, and the network devices 110 and terminal devices 120 may be specific devices as described above and will not be described herein. The communication devices may also include other devices in the communication system 100, such as network controllers, mobile management entities, and other network entities, which are not limited in an embodiment of the application.

It is understood that the terms "system" and "network" are often used interchangeably in this document. The term "and/or" in this document is only a description of the association relationship of the associated objects, indicating three relationships. For example, A and/or B, which can indicate: the existence of A alone, the existence of both A and B, and the existence of B alone. Additionally, the character "/" in this paper, generally indicates that the associated objects before and after the character "/" has an "or" relationship.

It is to be understood that the "indication" referred to in embodiments of the present application may be a direct indication, an indirect indication, or an indication of an associative relationship. For example, A indicates to B, which can mean that A indicates to B directly (for example, B can access the indication from A) or A indicates to B indirectly (for example, A indicates to C and B can access the indication through C) or A and B have an associative relationship.

In the description of embodiments of the present application, the term "corresponding" between two may entities indicate a direct correspondence or indirect correspondence between the two, or may indicate an association between the two, or may be a relationship of indicating and being indicated, configuring and being configured between the two.

Unlicensed spectrum is the spectrum regulated by countries and regions that can be used for radio device communication. The spectrum is usually treated as shared spectrum, which means that communication device in different communication systems can use the spectrum as long as they meet the regulatory requirements set by the country or region on the spectrum, and do not need to apply to the government for exclusive spectrum authorization.

In order to enable the friendly coexistence of various communication systems using unlicensed spectrum for wireless communication, some countries or regions have set regulatory requirements that must be obeyed in order to use unlicensed spectrum. For example, communication devices follow the "Listen Before Talk (LBT)" principle, i.e., communication devices need to listen to the channel before transmitting signals on the channels of the unlicensed spectrum, and only when the channel listening result shows that a channel is clear, the communication device can transmit signals. If the channel listening result of the communication device on the channel of unlicensed spectrum is channel busy, the communication device cannot perform the signal transmission. In order to ensure fairness, in a transmission, the length of signal transmission by a communication device using a channel in the unlicensed spectrum cannot exceed the Maximum Channel Occupancy Time (MCOT).

In NR-U technology, the Channel Occupancy Time (COT) obtained by the base station can be shared for uplink transmission of the terminal device. Similarly, the COT obtained by the terminal device can also be shared for downlink transmission of the base station. When scheduling the uplink transmission of the terminal device, the base station indicates the LBT type and channel access priority in an uplink grant (UL grant) according to the base station's own MCOT, such as whether the time of the scheduled uplink transmission is within the base station's MCOT, for the terminal device to perform LBT before the scheduled uplink transmission.

In the subsequent technical evolution, the use of unlicensed spectrum in higher frequency bands and related technologies will be considered, such as the 52.6GHz-71GHz discussed in the version 17 (release 17, Rel-17) standard. In the higher frequency bands, because the signal transmitting beam is narrower and more directional, it is more desirable to do directional channel listening (i.e., directional LBT) than omnidirectional channel listening in the lower frequency bands. When the channel is found to be free after channel listening by directional LBT, the channel can be occupied by sending signals through a beam in that direction. Compared with omnidirectional LBT, directional LBT can increase the access opportunity because channel occupancy in different beam directions can be performed simultaneously through spatial-division multiplexing. As shown in FIG. 2, when gNB1 uses omnidirectional LBT, the transmission of gNB2 affects the result of channel listening of gNB1, thus the result of channel listening of gNB1 is non-idle and cannot occupy the channel for transmission to UE1. As shown in FIG. 3, when adopting directional LBT, gNB1 performs channel listening in a spatial direction for transmission to UE1, at this time, since the transmission of gNB2 to UE2 is also directional and does not affect the result of channel listening of gNB1, thus the result of channel listening of gNB1 is channel idle and gNB1 can occupy the channel for transmission to UE1.

Additionally, the types of channel listening that can be used in Rel-17 include omnidirectional LBT, directional LBT, and LBT-free. Among them, omnidirectional LBT is simple to implement and simplifies the system design; directional LBT can improve the channel utilization; LBT free likewise has simplified design, reduced channel listening overhead, and high channel utilization. These types of channel listening may be used in different scenarios, and how to determine which channel listening type to use is a problem that needs to be solved.

Based on the above problems, the application proposes a scheme of channel listening, where the transmitting device can flexibly select the channel listening type from omnidirectional channel listening, directional channel listening, and channel listening free to cope with changes in channel usage and improve channel utilization and transmission efficiency.

The technical solutions of the present application are described in detail below by specific embodiments.

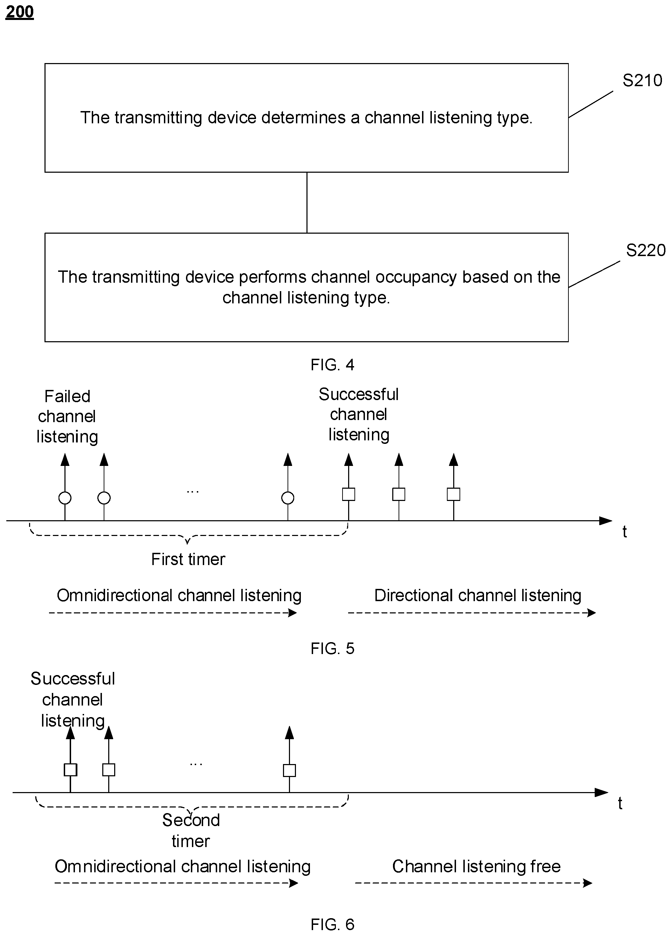

FIG. 4 is a schematic flow diagram of a method 200 for channel listening according to an embodiment of the present application. As shown in FIG. 4, the method 200 may include at least some of the following.

S210: The transmitting device determines the channel listening type.

S220: The transmitting device performs channel occupancy based on the channel listening type.

In an embodiment of the application, the transmitting device is able to flexibly select the channel listening type from omnidirectional channel listening, directional channel listening, and channel listening free to respond to changes in channel usage and improve channel utilization and transmission efficiency.

It should be noted that channel listening can be realized by LBT or by other means, which is not limited by the application.

In an embodiment of the application, the transmitting device, after determining the channel listening type, can perform channel occupancy based on the determined channel listening type.

For example, in the case where the transmitting device determines to use omnidirectional channel listening for channel occupancy, the transmitting device performs omnidirectional channel listening to listen, and, if the listening result shows that the listened channel is idle, can send a signal or a channel to occupy the channel via an omnidirectional beam.

Another example is that in the case where the transmitting device determines to use directional channel listening for channel occupancy, the transmitting device performs directional channel listening, and, if the listening result shows that the listened channel is idle, can send a signal or a channel to occupy the channel through a beam in the direction of channel listening.

Again, for example, in the case where the transmitting device determines to use channel listening free, the transmitting device may directly send a signal or a channel to occupy the channel.

In an embodiment of the application, the transmitting device may be a terminal device, and the transmitting device may also be a network device.

Optionally, in embodiments of the present application, S210 may be specifically as described in Example 1 to Example 6.

Example 1, the transmitting device determines to use the second channel listening type for channel listening based on a number of channel listening failures for the first channel listening type. For example, the transmitting device determines to use the second channel listening type for channel listening based on the number of LBT failures of the first channel listening type.

It should be noted that in NR-U technology, the transmitting device performs channel listening before channel occupation. When the first channel listening type is used for channel listening, if the channel listening always fails, it means that the channel listened to according to the first channel listening type is always non-idle. When the channel listening failure reaches a certain number of times, the transmitting device can change the channel listening type to continue the channel listening, i.e., change from the first channel listening type to the second channel listening type to continue the channel listening.

Optionally, in Example 1, when the number of channel listening failures for the first channel listening type is greater than or equal to a first threshold, the transmitting device determines to use the second channel listening type for channel listening.

Optionally, the first threshold is pre-configured or protocol-agreed, or, alternatively, the first threshold is configured by the network device.

For example, when the transmitting device performs channel listening according to omnidirectional channel listening, if it always finds that the channel is not idle, it means that the transmitting device can at least detect interference from a certain direction. In this case, if the transmitting device fails in performing omnidirectional channel listening for a certain number of times, it can switch to directional channel listening for channel listening. Because directional channel listening is to only listen to the status of the channel in a certain direction, the channel in this direction may not be occupied. Thus, after using directional channel listening to listen to the channel, the transmitting device may determine by channel listening that the channel in the direction is idle, and in response perform corresponding transmission. Specifically, the transmitting device determines the direction of channel listening, which can be based on spatial information of the transmitted channel or signal. For downlink transmissions, i.e., when the transmitting device is a network device, the network device may determine the direction of downlink channel listening based on the spatial information of a downlink channel. For example, the network device can determine the direction of channel listening based on the Synchronization Signal Block (SSB) index associated with the transmitted channel or signal, or the network device can determine the direction of channel listening based on the Transmission Configuration Indicator (TCI) status corresponding to the channel. For uplink transmission, i.e., when the transmitting device is a terminal device, the terminal device can determine the direction of uplink channel listening based on spatial information of the uplink channel.

It should be noted that an SSB is used to carry the synchronization signal and broadcast channel of a beam. That is, an SSB can also be called a synchronization signal/physical broadcast channel block (SS/PBCH block).

Optionally, in Example 1, the transmitting device determines to use the second channel listening type for channel listening based on a first timer and the number of channel listening failures of the first channel listening type.

It should be noted that the first timer is reset when a successful channel listening for the first channel listening type occurs.

Optionally, when the channel listening of the first channel listening type fails continuously during runtime of the first timer, or the channel listening of the first channel listening type is unsuccessful during runtime of the first timer, or the number of successful attempts at channel listening of the first channel listening type during runtime of the first timer does not reach a second threshold, the transmitting device determines to use the second channel listening type for channel listening upon expiration of the first timer.

Optionally, the second threshold is pre-configured or agreed upon by protocol, or, alternatively, the second threshold is configured by the network device.

It should be noted that the description "the transmitting device determines to use the second channel listening type for channel listening upon expiration of the first timer" can be understood as the transmitting device determines to use the second channel listening type for channel listening when determining that the first timer expires, and can also be understood as the transmitting device determines to use the second channel listening type for channel listening after the first timer expires.

For example, as shown in FIG. 5, during runtime of the first timer, the transmitting device uses omnidirectional channel listening for channel listening, but the channel listening for omnidirectional channel listening fails continuously and no successful channel listening occurs during runtime of the first timer, and the transmitting device determines to use directional channel listening for channel listening when the first timer expires, and the channel listening of directional channel listening is successful.

Optionally, when a number of channel listening failures of the first channel listening type reaches a third threshold before the first timer expires, the transmitting device determines to use the second channel listening type for channel listening. That is, the first timer limit can be ignored in the case of the number of channel listening failures of the first channel listening type reaches the third threshold.

Optionally, the third threshold is pre-configured or agreed upon by protocol, or, alternatively, the third threshold is configured by the network device.

It should be noted that the third threshold can be the same or different from the first threshold.

Optionally, the first timer is pre-configured or agreed upon, or, alternatively, the first timer is configured by the network device.

In Example 1, for example, the first channel listening type is omnidirectional channel listening, and the second channel listening type is directional channel listening. Another example is that the first channel listening type is directional channel listening and the second channel listening type is omnidirectional channel listening.

Therefore, in the scheme of Example 1, after the occurrence of continuous failed attempts of omnidirectional channel listening, the transmitting device can adjust to the directional channel listening, which can make the channel listening more specific and avoid the influence of interference unrelated to the channel direction on the channel listening result, thus improving utilization of the channel.

Example 2, the transmitting device determines to use the second channel listening type for channel listening based on the number of successful attempts at channel listening of the first channel listening type. For example, the transmitting device determines to use the second channel listening type for channel listening based on the number of LBT successes for the first channel listening type.

It should be noted that in NR-U technology, the transmitting device performs channel listening before channel occupation. When the first channel listening type is used for channel listening, if the channel listening is successful for several times, it means that the channel listened to according to the first channel listening type is always idle. When the number of successful attempts at channel listening reaches a certain number, the transmitting device can change the channel listening type to continue channel listening, or, the transmitting device can switch from a channel-listening state to a non-channel-listening state, i.e., the transmitting device can directly occupy the channel.

Optionally, in Example 2, when the number of successful attempts at channel listening for the first channel listening type is greater than or equal to a fourth threshold, the transmitting device determines to use the second channel listening type for channel listening.

Optionally, the fourth threshold is pre-configured or agreed upon by protocol, or, alternatively, the fourth threshold is configured by the network device.

For example, when the transmitting device performs channel listening according to omnidirectional channel listening or directional channel listening, if the channel is always found to be idle, it means that the current channel is relatively idle, or the interference is controllable. For example, in a plant, the locations of the transmitting device and the receiving device are fixed, and no other interfering transmitting device is within the signal coverage of the transmitting device. In this case, the transmitting device can occupy the channel with channel listening free (LBT free), or the transmitting device can use the channel for transmission directly without channel listening.

Optionally, in Example 2, the transmitting device determines to use the second channel listening type for channel listening based on a second timer and the number of successful attempts at channel listening of the first channel listening type.

It should be noted that the second timer is reset when a failed channel listening of the first channel listening type occurs.

Optionally, when the channel listening of the first channel listening type continues succeeding during runtime of the second timer, or, the channel listening of the first channel listening type does not fail during runtime of the second timer, or, a number of channel listening failures of the first channel listening type does not reach a fifth threshold during runtime of the second timer, the transmitting device determines to use the second channel listening type for channel listening upon expiration of the second timer.

Optionally, the fifth threshold is pre-configured or agreed upon by protocol, or, alternatively, the fifth threshold is configured by the network device.

It should be noted that the expression "the transmitting device determines to use the second channel listening type for channel listening upon expiration of the second timer" can be understood as the transmitting device determines to use the second channel listening type for channel listening when the second timer expires, and can also be understood as the transmitting device determines to use the second channel listening type for channel listening after the second timer expires.

For example, as shown in FIG. 6, during runtime of the second timer, the transmitting device uses omnidirectional channel listening for channel listening, but the channel listening for omnidirectional channel listening during runtime of the second timer is continuously successful and no failed channel listening occurs, the transmitting device determines to dispense with channel listening for channel occupation when the second timer expires, i.e., it directly occupies the channel when the second timer expires.

Optionally, when the number of successful attempts at channel listening of the first channel listening type reaches a sixth threshold before the second timer expires, the transmitting device determines to use the second channel listening type for channel listening. That is, the second timer limit can be ignored if the number of successful attempts at channel listening of the first channel listening type reaches the sixth threshold.

Optionally, the sixth threshold is pre-configured or agreed upon by protocol, or, alternatively, the sixth threshold is configured by the network device.

It should be noted that the sixth threshold can be the same or different from the fourth threshold.

Optionally, the second timer is pre-configured or agreed upon, or, alternatively, the second timer is configured by the network device.

In Example 2, for example, the first channel listening type is directional channel listening and the second channel listening type is omnidirectional channel listening. Another example is that the first channel listening type is directional channel listening and the second channel listening type is channel listening free. For example, the first channel listening type is omnidirectional channel listening, and the second channel listening type is channel listening free. For example, the first channel listening type is omnidirectional channel listening, and the second channel listening type is directional channel listening.

Optionally, in Example 2, when the transmitting device uses the channel in the channel listening free (LBT free) mode, in order to avoid changes in the channel interference environment, the transmitting device may also periodically perform omnidirectional channel listening or directional channel listening in the LBT free mode. When the omnidirectional channel listening or directional channel listening is successful, the channel listening free (LBT free) mode is maintained. Otherwise, the second timer is started, and the channel listening type is switched upon expiration of the second timer when successful channel listening occurs continuously, and no failed channel listening occurs during a time period of the second timer.

Therefore, in the scheme of Example 2, after successful omnidirectional channel listening continuously occurs, it can be switched to a directional channel listening approach, no channel listening (channel listening free), or with periodic channel listening, which reduces the overhead of channel listening when the channel load is relatively small, thus improving the channel utilization. At the same time, the periodic channel listening avoids possible interference to other devices and ensures the fairness of channel usage.

It should be noted that the aforementioned Example 1 and Example 2 can be abstracted as: the transmitting device determines to use the second channel listening type for channel listening based on a channel listening result of the first channel listening type. That is, the channel listening result of the first channel listening type can be the number of channel listening failures of the first channel listening type in Example 1. The channel listening result of the first channel listening type can also be the number of successful attempts at channel listening of the first channel listening type in Example 2. In this case, the transmitting device can flexibly change the channel listening type according to the channel listening result of the first channel listening type, so that the channel listening type of the device better matches with the current channel usage to improve the efficiency of channel occupation.

Example 3, the transmitting device determines the channel listening type based on a measurement result.

Optionally, the measurement is used to reflect the occupancy status of the channel, or, alternatively, the measurement is used to reflect the channel quality.

Optionally, in Example 3, the measurement includes, but is not limited to, at least one of the following:
Measurements for Received Signal Strength Indication (RSSI), Channel Occupancy (CHO), Channel State Information Reference Signal (CSI-RS), and Sounding Reference Signal (SRS).

It should be noted that the measurement result for CSI-RS can be, for example, a Channel Quantity Indicator (CQI).

For example, when the measurement result indicates that the current channel is lightly loaded, the transmitting device determines to occupy that the channel using LBT free. For example, when the measurement result indicates that the current channel is heavy loaded, the transmitting device determines to use omnidirectional channel listening or directional channel listening for channel listening.

Optionally, in Example 3, the transmitting device may determine the channel listening type based on the measurement result and at least one threshold value. For example, the transmitting device may determine a load level of the current channel based on one or more thresholds corresponding to the measurement result. Additionally, the current channel may be a channel that the transmitting device is prepared to occupy.

It should be noted that when the transmitting device is a terminal device, the transmitting device may obtain the measurement result by measurement. When the transmitting device is a network device, the transmitting device may obtain the measurement result by receiving a measurement report reported by the terminal device.

Thus, in the scheme of Example 3, the transmitting device can change the channel listening type accordingly based on the channel usage reflected by the measurement results, thus improving the channel utilization.

Example 4, the transmitting device determines the channel listening type based on the reception quality of the channel or signal.

Optionally, the receiving quality includes, but is not limited to, at least one of the following: Signal-to-noise ratio, block error rate (BLER), and Hybrid Automatic Repeat request-Acknowledgement (HARQ-ACK) feedback of Physical Downlink Shared Channel (PDSCH).

For example, when the reception quality reflects the good reception quality of the current channel, the transmitting device may determine to occupy the channel using LBT free. For example, when the reception quality reflects the poor reception quality of the current channel, the transmitting device determines to use omnidirectional channel listening or directional channel listening for channel listening.

In Example 4, the transmitting device may determine the reception quality of the current channel based on one or more thresholds corresponding to the reception quality. Additionally, the current channel may be a channel that the transmitting device is prepared to occupy.

It should be noted that in Example 4, the transmitting device can be a terminal device or a network device.

Thus, in the scheme of Example 4, the transmitting device can adjust the channel listening type accordingly to the channel reception quality, thus improving the channel utilization.

Example 5, the transmitting device determines the channel listening type based on the indication information.

According to the present invention, the indication information is carried in at least one of the following information:
Downlink Control Information (DCI) for uplink authorization, DCI for indicating channel occupancy time (COT) information, second information in the four-step random access, uplink control information carried in the uplink configuration authorization, system information, and paging information.

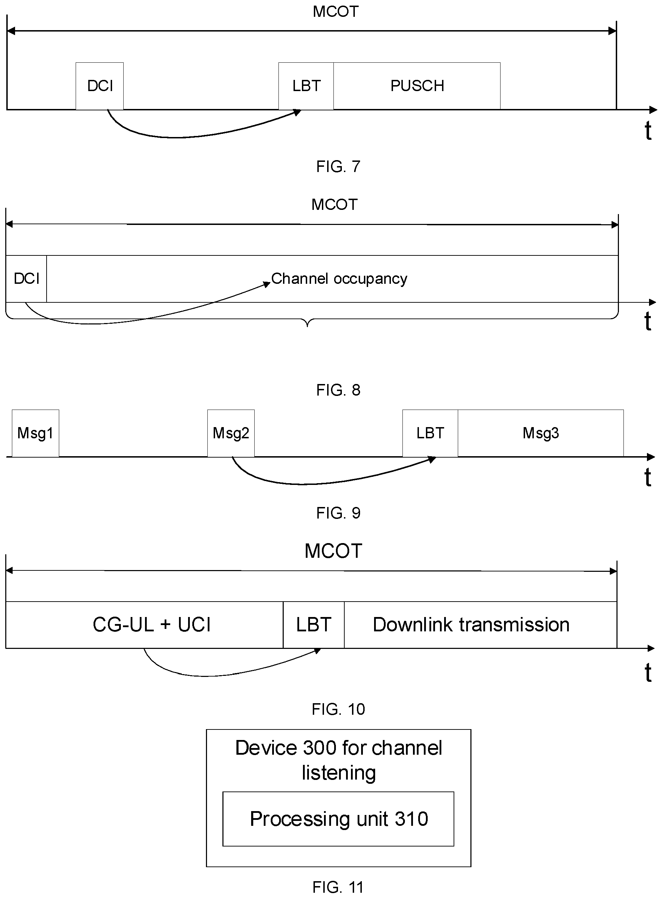

For example, as shown in FIG. 7, in the COT sharing scenario, the network device carries the indication information in the DCI used for uplink authorization, where the indication information is used for the channel listening type (LBT). After receiving the DCI, the terminal device determines the channel listening type based on the indication information, performs channel listening based on the channel listening type, as well as transmits the Physical Uplink Shared Channel (PUSCH) if the channel listening result is channel idle.

As another example, as shown in FIG. 8, in a COT sharing scenario, the DCI (e.g., DCI format 2_0) used to indicate COT information carries the indication information that is used to indicate the channel listening type (LBT) for the duration of the COT.

It should be noted that in NR-U systems, DCI format 2_0 can be used for COT-related indication information containing the following indication domains: available LBT bandwidth, COT duration, and listening group identity. The COT indication information carried by DCI format 2_0 is used to indicate to the UE the channel occupancy acquired by the base station, both in the time and frequency domains. In the unlicensed spectrum in the high frequency band, when the group common physical downlink control channel (PDCCH) for the base station indicates that the base station has acquired COT information, it can indicate the channel listening type (LBT) corresponding to the COT. The UE that receives the COT indication information carried by the DCI format 2_0 can obtain the channel listening type corresponding to the COT. For example, the indication information can be used for the LBT type of the UE when the COT of the base station is shared with the UE.

As another example, as shown in FIG. 9, in the four-step random access process, the terminal device sends a first message (message 1, Msg 1) in the four-step random access, and the network device, after receiving Msg 1, sends a corresponding message Msg 2, carries in Msg 2 the time-frequency resource for the terminal device to send the third message (message 3, Msg 3) in the four-step random access, and carries in Msg 2 the indication message, which is used to indicate the channel listening type (LBT) before sending Msg 3.

As another example, as shown in FIG. 10, in a COT sharing scenario, the Uplink Control Information (UCI) carried by the terminal device in the Uplink Configure Grant (CG-UL) includes the indication information, which is used to indicate the channel Listening Type (LBT) before the start of downlink transmission. Upon receipt of the indication information, the network device determines the channel listening type (LBT) prior to the start of downlink transmission based on the indication information.

Thus, in the scenario of Example 5, the network device or terminal device can use the indication information to indicate the channel listening type and improve the utilization of the channel flexibly.

Example 6, the transmitting device determines the channel listening type based on the type of the first information, wherein the first information comprises a channel and/or a signal.

For example, when the first information is a terminal-specific channel, the transmitting device determines that channel listening is performed using directional channel listening, wherein the terminal-specific channel includes a terminal-specific PDCCH and/or a terminal-specific PDSCH.

For example, when the first message is a common channel, the transmitting device determines whether to use omnidirectional channel listening or directional channel listening for channel listening.

For example, when the first message is SSB or CSI-RS, the transmitting device determines to perform channel occupancy using the scheme of channel listening free.

It should be noted that terminal-specific channels manifest directionality more, especially in the high frequency band, directional channel listening is used to perform the preferred channel listening for terminal-specific channels. The common channel, because of its wider coverage, has its transmit beam often wider than the transmit beam of the terminal-specific channel, directional channel listening, or omnidirectional channel listening can used for the common channel. For signals with shorter transmitting time, such as SSB or CSI-RS, the channel occupation can be done in the way of channel listening free (LBT free) due to the shorter channel occupation time required to transmit the signal.

Optionally, in Example 6, the first information may be an uplink channel and/or an uplink signal, and the first information may also be a downlink channel and/or a downlink signal. Additionally, the first information may be a pending message, such as a pending signal, a pending channel, etc. Of course, the first information can also be some other information, such as the signal already sent, the channel already sent, etc.

Thus, in the scenario of Example 6, the network device or terminal device can determine the channel listening type based on the type of the first information, thereby employing an appropriate channel listening type and improving the utilization of the channel.

Optionally, in some embodiments of the present application, where the transmitting device determines to use channel listening free, the transmitting device determines to use omnidirectional channel listening or directional channel listening for channel listening based on the time information.

Specifically, when omnidirectional channel listening or directional channel listening is successful, the transmitting device continues to use channel listening free for channel occupation; or, when omnidirectional channel listening or directional channel listening fails, the transmitting device determines to use omnidirectional channel listening or directional channel listening for channel occupation.

It should be noted that successful omnidirectional channel listening or directional channel listening: does not necessarily mean a single successful listening, but can also mean that the number of successful listening over a period of time reaches a threshold value, which can be determined as successful listening. Of course, a timer can be also jointly used to determine the success of omnidirectional channel listening or directional channel listening, please refer to the description of the above Example 2, here will not repeat.

Similarly, when omnidirectional channel listening or directional channel listening fails: it does not necessarily mean a single failure, but can also mean that the number of listening failures over a period of time reaches a threshold value, which can be determined as the failed listening. Of course, a timer can be also jointly used to determine failure of the omnidirectional channel listening or directional channel listening, of which the details can bed referenced to in the above Example 1 in the relevant description and will not repeated here.

It should be noted that the time information can be determined by a configured period and time offset. That is, in the case of the transmitting device determining to use channel listening free, the transmitting device can periodically perform channel listening, such as periodically using omnidirectional channel listening or directional channel listening for channel listening. Thus, it can accurately determine a state of the channel load, avoid possible interference to other devices, and ensure the fairness of channel use.

Optionally, in some embodiments of the present application, the transmitting device determines to switch from the channel listening state to the non-channel-listening state based on the measurement results; or, the transmitting device determines to switch from the non-channel-listening state to the channel listening state based on the measurement results.

For example, if a measurement result shows good status for a period of time, the transmitting device determines to switch from the channel listening state to the non-channel-listening state based on the measurement result. Another example is that if the measurements result shows poor status for a period of time, the transmitting device switches from the non-channel-listening state to the channel listening state based on the measurement result.

It should be noted that the channel listening state can be, for example, an omnidirectional channel listening state or a directional channel listening state. The non-channel-listening state can be, for example, a channel listening free state or a state without channel listening.

Optionally, the measurement result is used to reflect the occupancy status of the channel, or, alternatively, the measurement result is used to reflect the channel quality.

Optionally, the measurement result includes, but are not limited to, at least one of the following:
a measurement for RSSI, a measurement for channel occupancy, measurement for CSI-RS, and a measurement for SRS.

For example, a measurement of CSI-RS could be CQI.

Therefore, in an embodiment of the application, the transmitting device is able to flexibly select a channel listening type from omnidirectional channel listening, directional channel listening, and channel listening free to respond to changes in channel usage and improve channel utilization and transmission efficiency.

The method embodiments of the present application are described in detail above in connection with FIGs. 4 to 10, and the device embodiments of the present application are described in detail below in connection with FIGS. 11 to 14. It should be understood that the device embodiments and the method embodiments correspond to each other, and similar descriptions may be referred to the method embodiment.

FIG. 11 illustrates a schematic block diagram of a device 300 for channel listening according to an embodiment of the present application. As shown in FIG. 11, the device 300 for channel listening comprises:
a processing unit 310 for determining a channel listening type.
The processing unit 310, is also used for channel occupation according to the channel listening type.

Optionally, the channel listening type includes a first channel listening type and a second channel listening type.

The processing unit 310 is specifically configured to:
determine to use a second channel listening type for channel listening based on a channel listening result of the first channel listening type.

Optionally, the processing unit 310 is specifically configured to:
determine to use the second channel listening type for channel listening based on a number of channel listening failures of the first channel listening type.

Optionally, the processing unit 310 is specifically configured to:
determine to use the second channel listening type for channel listening when the number of channel listening failures of the first channel listening type is greater than or equal to a first threshold.

Optionally, the processing unit 310 is specifically configured to:
determine to use the second channel listening type for channel listening based on a first timer and the number of channel listening failures of the first channel listening type.

Optionally, the processing unit 310 is specifically configured to:
determine to use the second channel listening type for channel listening upon expiration of the first timer when channel listening of the first channel listening type fails continuously during runtime of the first timer, or, channel listening of the first channel listening type is unsuccessful during runtime of the first timer, or, a number of successful attempts at channel listening of the first channel listening type does not reach a second threshold during runtime of the first timer.

Optionally, the processing unit 310 is specifically configured to:
determine to use the second channel listening type for channel listening when the number of channel listening failures of the first channel listening type before expiration of the first timer reaches a third threshold.

Optionally, the first timer is pre-configured or agreed upon, or, alternatively, the first timer is configured by the network device.

Optionally, the first channel listening type is omnidirectional channel listening, and the second channel listening type is directional channel listening.

Optionally, the processing unit 310 is specifically configured to:
determine to use the second channel listening type for channel listening based on a number of successful attempts at channel listening of the first channel listening type.

Optionally, the processing unit 310 is specifically configured to:
determine to use the second channel listening type for channel listening when the number of successful attempts at channel listening of the first channel listening type is greater than or equal to a fourth threshold.

Optionally, the processing unit 310 is specifically configured to:
determine to use the second channel listening type for channel listening based on a second timer and the number of successful attempts at channel listening of the first channel listening type.

Optionally, the processing unit 310 is specifically configured to:
determine to use the second channel listening type for channel listening upon expiration of the second timer when the channel listening of the first channel listening type continues succeeding during runtime of the second timer, or, the channel listening of the first channel listening type does not fail during runtime of the second timer, or, number of channel listening failures of the first channel listening type does not reach a fifth threshold during runtime of the second timer.

Optionally, the processing unit 310 is specifically configured to:
determine to use the second channel listening type for channel listening when the number of successful attempts at channel listening of the first channel listening type reaches a sixth threshold before expiration of the second timer.

Optionally, the second timer is pre-configured or agreed upon, or, alternatively, the second timer is configured by the network device.

Optionally, the first channel listening type is directional channel listening, and the second channel listening type is omni-directional channel listening; or
the first channel listening type is directional channel listening, and the second channel listening type is channel listening free; or
the first channel listening type is omnidirectional channel listening, and the second channel listening type is channel listening free.

Optionally, the processing unit 310 is specifically configured to:
determine the channel listening type based on a measurement results.

Optionally, the processing unit 310 is specifically configured to:
determine the channel listening type based on the measurement result and at least one threshold value.

Optionally, the processing unit 310 is specifically configured to:
Determine the channel listening type based on the indicated information.

Optionally, the indication information is carried in at least one type of the following information:
downlink control information (DCI) for uplink authorization, DCI for indicating channel occupancy time (COT) information, a second message (msg2) in four-step random access, uplink control information carried in uplink configuration authorization, system information, and paging information.

Optionally, the channel listening type comprises at least one of the following:
omni-directional channel listening, directional channel listening, and channel listening free.

Optionally, the processing unit 310 is specifically configured to:
determine the channel listening type based on a type of first information, wherein the first information comprises a channel and/or a signal.

Optionally, the processing unit 310 is specifically configured to:
determine to use directional channel listening for channel listening when the first information is a terminal-specific channel; or
determine to use omnidirectional channel listening or directional channel listening for channel listening when the first information is a common channel; or
determine to use channel listening free for channel occupancy when the first information is a synchronization signal block (SSB) or the channel state information reference signal (CSI-RS).

Optionally, the terminal-specific channel comprises at least one of:
terminal-specific physical downlink control channel (PDCCH) and terminal-specific physical downlink shared channel (PDSCH).

The processing unit 310 is further configured to determine to use omnidirectional channel listening or directional channel listening for channel listening based on time information in the case where the transmitting device determines to use channel listening free.

The processing unit 310 is further configured to determine a switch from a channel listening state to a non-channel-listening state based on a measurement result; or

The processing unit 310 is further configured to determine a switch from the non-channel-listening state to the channel listening state based on the measurement result.

Optionally, the measurement result is used to reflect occupancy status of the channel, or, alternatively, the measurement result is used to reflect channel quality.

Optionally, the measurement result includes at least one of the following:
a measurement for received signal strength indication (RSSI), a measurement for channel occupancy, a measurement for CSI-RS, and a measurement for sounding reference signal (SRS).

Optionally, in some embodiments, the aforementioned processing unit may be one or more processors.

It should be understood that the device 300 for channel listening according to the embodiment of the present application may correspond to the transmitting device in the method embodiments of the present application, and that the aforementioned and other operations and/or functions of the individual units in the device 300 for channel listening are respectively intended to implement the corresponding processes of the transmitting device in the method 200 shown in FIG. 4, and will not be repeated here for brevity.

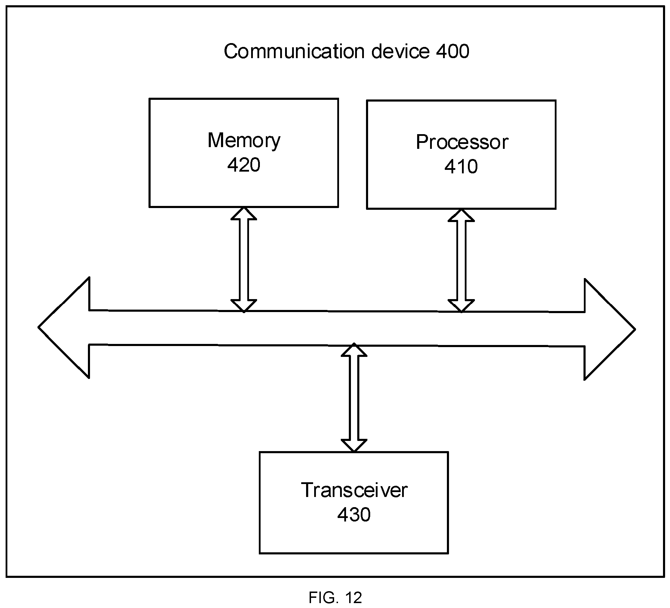

FIG. 12 is a schematic structural diagram of a communication device 400 provided in an embodiment of the present application. The communication device 400 shown in FIG. 12 includes a processor 410 that can call and run a computer program from memory to implement the method in an embodiment of the application.

Optionally, as shown in FIG. 12, the communication device 400 may also include a memory 420, wherein the processor 410 may call and run a computer program from the memory 420 to implement the method in embodiments of the present application.

Therein, the memory 420 may be a separate device from the processor 410 or may be integrated in the processor 410.

Optionally, as shown in FIG. 12, the communication device 400 may also include a transceiver 430. The processor 410 may control transceiver 430 to communicate with other devices, specifically, to send information or data to, or receive information or data from, other devices.

Therein, the transceiver 430 may include a transmitter and a receiver. The transceiver 430 may further include an antenna, and the number of antennas may be one or more.

Optionally, the communication device 400 may specifically be the transmitting device of embodiments of the present application, and the communication device 400 may implement the corresponding processes implemented by the transmitting device in each of the methods in embodiments of the present application, which will not be repeated herein for the sake of brevity.

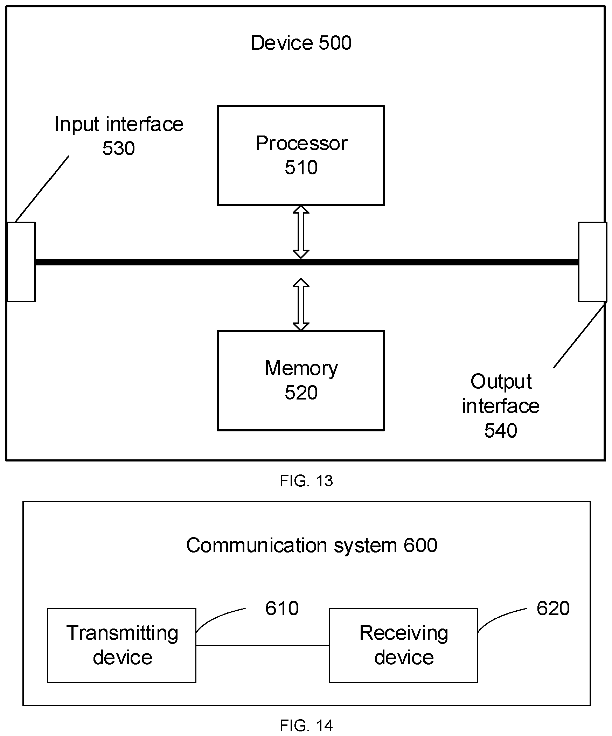

FIG. 13 is a schematic structural view of the device of an embodiment of the present application. The device 500 shown in FIG. 13 includes a processor 510 that can call and run a computer program from memory to implement the method in the embodiments of the present application.

Optionally, as shown in FIG. 13, the device 500 may also include a memory 520, wherein the processor 510 may call and run a computer program from the memory 520 to implement the method in embodiments of the present application.

In particular, the memory 520 may be a separate device from the processor 510 or may be integrated in the processor 510.

Optionally, the device 500 may also include an input interface 530, wherein the processor 510 may control the input interface 530 to communicate with other devices or chips, specifically, to obtain information or data sent by other devices or chips.

Optionally, the device 500 may also include an output interface 540, wherein the processor 510 may control the output interface 540 to communicate with other devices or chips, specifically, to output information or data to other devices or chips.

Optionally, the device can be applied to the transmitting device in an embodiment of the application, and the device can implement the corresponding processes implemented by the transmitting device in each method of embodiments of the present application, which will not be repeated here for the sake of brevity.

Optionally, the device mentioned in an embodiment of the application may also be a chip. For example, it can be a system-level chip, system-on-a-chip, system-on-a-chip or system-on-a-chip, etc.

FIG. 14 is a schematic block diagram of a communication system 600 provided in an embodiment of the present application. As shown in FIG. 14, the communication system 600 includes a transmitting device 610 and a receiving device 620.

Among them, the transmitting device 610 can be used to implement the corresponding functions implemented by the transmitting device in the aforementioned method, and for the sake of brevity, will not be repeated here.

It should be understood that the processor of an embodiment of the present application may be an integrated circuit chip with signal processing capabilities. In implementation, the steps of the aforementioned method embodiment may be accomplished by integrated logic circuitry in the hardware in the processor or by instructions in the form of software. The aforementioned processor may be a general-purpose processor, a Digital Signal Processor (DSP), an Application Specific Integrated Circuit (ASIC), a Field Programmable Gate Array (FPGA) or other programmable logic device, discrete gate or transistor logic device, or discrete hardware component. The methods, steps, and logical block diagrams of each of the disclosures in the embodiments of the application may be implemented or performed. The general-purpose processor may be a microprocessor, or the processor may also be any conventional processor, etc. The steps of the method disclosed in conjunction with the embodiments of the present application can be directly embodied as performed by the hardware decoding processor or performed with a combination of hardware and software modules in the decoding processor. The software module can be located in random memory, flash memory, read-only memory, programmable read-only memory or electrically rewritable programmable memory, registers, and other storage media well established in the art. The storage medium is located in the memory, and the processor reads the information in the memory and completes the steps of the aforementioned method in combination with its hardware.

It is understood that the memory in the embodiments of the present application may be volatile memory or non-volatile memory, or may include both volatile and non-volatile memory. Among these, the non-volatile memory may be Read-Only Memory (ROM), Programmable ROM (PROM), Erasable Programmable Read-Only Memory (EPROM), Electrically Erasable Programmable Read-Only Memory (EEPROM), Electrically EPROM, EEPROM), or flash memory. The volatile memory may be Random Access Memory (RAM), which is used as an external cache. By way of illustration, but not limitation, many forms of RAM are available, such as Static RAM (SRAM), Dynamic RAM (DRAM), Synchronous DRAM (SDRAM), Double Data Rate Synchronous Random-Access memory (Double Data Rate SDRAM, DDR SDRAM), Enhanced SDRAM (ESDRAM), Synchlink DRAM (SLDRAM), and Direct Memory Bus Random Access Memory (Direct Rambus RAM, DR RAM). It should be noted that the memories of the systems and methods described herein are intended to include, but are not limited to, these and any other suitable types of memories.

It should be understood that the aforementioned memory is exemplary but not limiting. For example, the memory in an embodiment of the application may also be static RAM (SRAM), dynamic RAM (DRAM), synchronous DRAM (SDRAM), double data rate SDRAM (DDR SDRAM), enhanced SDRAM (ESDRAM), synchronous link DRAM (synch link DRAM, SLDRAM), and direct memory bus random access memory (Direct Rambus RAM, DR RAM), and so on. That is, the memory in an embodiment of the application is intended to include, but is not limited to, these and any other suitable types of memory.

Embodiments of the present application also provide a computer readable storage medium for storing a computer program.

Optionally, the computer-readable storage medium may be applied to the transmitting device in an embodiment of the application, and the computer program causes the computer to perform the corresponding processes implemented by the transmitting device in each of the methods of embodiments of the present application, which will not be described herein for brevity.

Embodiments of the present application also provide a computer program product including computer program instructions.

Optionally, the computer program product may be applied to the transmitting device in embodiments of the present application, and the computer program instructions cause the computer to perform the corresponding processes implemented by the transmitting device in each of the methods of embodiments of the present application, which will not be repeated herein for brevity.

Embodiments of the present application also provide a computer program.

Optionally, the computer program may be applied to the transmitting device in an embodiment of the application, and when the computer program is run on the computer, causes the computer to perform the corresponding processes implemented by the transmitting device in each of the methods of embodiments of the present application, which will not be described herein for brevity.

One of ordinary skill in the art can realize that the units and algorithmic steps of the various examples described in conjunction with the embodiments disclosed herein are capable of being implemented in electronic hardware, or a combination of computer software and electronic hardware. Whether these functions are performed in hardware or software depends on the particular application and design constraints of the technical solution. The skilled person may use different methods to implement the described functions for each particular application, but such implementations should not be considered outside the scope of the application.

It will be clear to those skilled in the field that, for the convenience and brevity of description, the specific working processes of the systems, devices and units described above can be referred to the corresponding processes in the preceding method embodiments and will not be repeated here.

In the several embodiments provided in the application, it should be understood that the disclosed system, device and method, can be implemented in other ways. For example, the embodiments of the devices described above are merely schematic, for example, the division of the units described, which is only a logical functional division, can be practically implemented in another way. For example, multiple units or components can be combined or can be integrated into another system, or some features can be ignored, or not implemented. In another aspect, the mutual coupling or direct coupling or communication connection shown or discussed can be realized through some interface. An indirect coupling or communication connection between devices or units can be in electrical, mechanical, or other forms.

The units illustrated as separate components may or may not be physically separated, and the components displayed as units may or may not be physical units, i.e., they may be located in one place or may be distributed to a plurality of network units. Some or all of these units may be selected according to practical needs to achieve the purpose of the embodiment solution.

Alternatively, each functional unit in each embodiment of the present application may be integrated in a single processing unit, or each unit may be physically present separately, or two or more units may be integrated in a single unit.

The functions described may be stored in a computer readable storage medium if they are implemented in the form of a software functional unit and sold or used as a separate product. It is understood that the technical solution of the present application, or the part of the technical solution that essentially contributes to the prior art, may be embodied in the form of a software product that is stored in a storage medium and includes a number of instructions to cause a computer device (which may be a personal computer, a server, or a network device, etc.) to perform all or some of the steps of the method described in various embodiments of the present application. The aforementioned storage media include: Universal Serial Bus (USB) flash drives, removable hard drives, Read-Only Memory (ROM), Random Access Memory (RAM), disks, or Compact Disc Read-Only Memory (CD-ROM), and other media that can store program code.

## Claims

1. A method of channel listening, comprising:
determining, by a transmitting device (300, 400, 500, 610), a channel listening type based on indication information, wherein the channel listening type comprises at least one of omni-directional channel listening, directional channel listening, and channel listening free; and
performing, by the transmitting device (300, 400, 500, 610), channel occupancy for New Radio unlicensed, NR-U, communication according to the channel listening type;
the method is **characterized in that** the indication information is carried in system information and downlink control information, DCI, for uplink authorization.

2. The method as claimed in any one of claim 1, **characterized in that** the method further comprises.
in the case where the transmitting device (300, 400, 500, 610) determines to use channel listening free, the transmitting device (300, 400, 500, 610) determines to use omnidirectional channel listening or directional channel listening for channel listening based on time information.

3. The method as claimed in any one of claim 1, **characterized in that** the method further comprises:
determining, by the transmitting device (300, 400, 500, 610), to switch from a channel listening state to a non-channel-listening state based on a measurement result; or
determining, by the transmitting device (300, 400, 500, 610), to the switch from the non-channel-listening state to the channel listening state based on a measurement result.

4. A device (300, 400, 500, 610) for channel listening, comprising:
a processing unit (310) for determining a channel listening type based on indicated information;
wherein the processing unit (310) is configured to perform channel occupancy for New Radio unlicensed, NR-U, communication according to the channel listening type;
wherein the device is **characterized in that** the indication information is carried in system information and downlink control information, DCI, for uplink authorization.

5. The device (300, 400, 500, 610) as claimed in any one of claim 4, **characterized in that**:
in case the transmitting device (300, 400, 500, 610) determines to use channel listening free, the processing unit (310) further determines to use omnidirectional channel listening or directional channel listening for channel listening based on time information.

6. The device (300, 400, 500, 610) as claimed in any one of claim 4, **characterized in that**:
the processing unit (310) is further configured to determine a switch from the channel listening state to the non-channel-listening state based on a measurement result; or
the processing unit (310) is further configured to determine a switch from the non-channel-listening state to the channel listening state based on a measurement result.

7. A computer readable storage medium, **characterized by** being used to store a computer program, the computer program causing the computer to perform a method as claimed in any one of claims 1 to 3.

## Patentansprüche

1. Verfahren zur Kanalüberwachung, umfassend:
Bestimmen, durch eine Übertragungsvorrichtung (300, 400, 500, 610), eines Kanalüberwachungstyps basierend auf Angabeinformationen, wobei der Kanalüberwachungstyp omnidirektionale Kanalüberwachung und/oder direktionale Kanalüberwachung und/oder kanalüberwachungsfrei umfasst; und
Durchführen, durch die Übertragungsvorrichtung (300, 400, 500, 610), von Kanalbelegung für eine New-Radio-Unlicensed- bzw. NR-U-Kommunikation gemäß dem Kanalüberwachungstyp;
das Verfahren ist **dadurch gekennzeichnet, dass** die Angabeinformationen in Systeminformationen und Downlink-Steuerinformationen bzw. DCI für Uplink-Autorisierung geführt werden.

2. Verfahren nach einem von Anspruch 1, **dadurch gekennzeichnet, dass** das Verfahren ferner Folgendes umfasst:
falls die Übertragungsvorrichtung (300, 400, 500, 610) bestimmt, kanalüberwachungsfrei zu verwenden, bestimmt die Übertragungsvorrichtung (300, 400, 500, 610) basierend auf Zeitinformationen, omnidirektionale Kanalüberwachung oder direktionale Kanalüberwachung zur Kanalüberwachung zu verwenden.

3. Verfahren nach einem von Anspruch 1, **dadurch gekennzeichnet, dass** das Verfahren ferner Folgendes umfasst:
Bestimmen, durch die Übertragungsvorrichtung (300, 400, 500, 610), von einem Kanalüberwachungszustand zu einem Nicht-Kanalüberwachungszustand zu wechseln, basierend auf einem Messergebnis; oder
Bestimmen, durch die Übertragungsvorrichtung (300, 400, 500, 610), von dem Nicht-Kanalüberwachungszustand zu dem Kanalüberwachungszustand zu wechseln, basierend auf einem Messergebnis.

4. Vorrichtung (300, 400, 500, 610) zur Kanalüberwachung, umfassend:
eine Verarbeitungseinheit (310) zum Bestimmen eines Kanalüberwachungstyps basierend auf Angabeinformationen, wobei die Verarbeitungseinheit (310) ausgelegt ist zum Durchführen von Kanalbelegung für eine New-Radio-Unlicensed- bzw. NR-U-Kommunikation gemäß dem Kanalüberwachungstyp;
wobei die Vorrichtung **dadurch gekennzeichnet ist, dass** die Angabeinformationen in Systeminformationen und Downlink-Steuerinformationen bzw. DCI für Uplink-Autorisierung geführt werden.

5. Vorrichtung (300, 400, 500, 610) nach einem von Anspruch 4, **dadurch gekennzeichnet, dass**:
falls die Übertragungsvorrichtung (300, 400, 500, 610) bestimmt, kanalüberwachungsfrei zu verwenden, die Verarbeitungseinheit (310) ferner basierend auf Zeitinformationen bestimmt, omnidirektionale Kanalüberwachung oder direktionale Kanalüberwachung zur Kanalüberwachung zu verwenden.

6. Vorrichtung (300, 400, 500, 610) nach einem von Anspruch 4, **dadurch gekennzeichnet, dass**:
die Verarbeitungseinheit (310) ferner ausgelegt ist zum Bestimmen eines Wechsels von einem Kanalüberwachungszustand zu einem Nicht-Kanalüberwachungszustand basierend auf einem Messergebnis; oder
die Verarbeitungseinheit (310) ferner ausgelegt ist zum Bestimmen eines Wechsels von dem Nicht-Kanalüberwachungszustand zu dem Kanalüberwachungszustand basierend auf einem Messergebnis.

7. Computerlesbares Speichermedium, **dadurch gekennzeichnet, dass** es zum Speichern eines Computerprogramms verwendet wird, wobei das Computerprogramm bewirkt, dass der Computer ein Verfahren nach einem der Ansprüche 1 bis 3 durchführt.

## Revendications

1. Procédé d'écoute de canal, comprenant :
la détermination, par un dispositif de transmission (300, 400, 500, 610), d'un type d'écoute de canal sur la base d'informations d'indication, le type d'écoute de canal comprenant au moins l'un parmi l'écoute de canal omnidirectionnelle, l'écoute de canal directionnelle, et l'écoute de canal libre ; et
la réalisation, par le dispositif d'émission (300, 400, 500, 610), de l'occupation de canal pour la communication New Radio sans licence, NR-U, en fonction du type d'écoute de canal ;
le procédé étant **caractérisé en ce que** les informations d'indication sont portées dans les informations système et les informations de commande de liaison descendante, DCI, pour l'autorisation de liaison montante.

2. Procédé selon l'une quelconque de la revendication 1, **caractérisé en ce que** le procédé comprend en outre :
dans le cas où le dispositif émetteur (300, 400, 500, 610) détermine d'utiliser l'écoute de canal libre, le dispositif émetteur (300, 400, 500, 610) détermine d'utiliser l'écoute de canal omnidirectionnelle ou l'écoute de canal directionnelle pour l'écoute de canal en fonction d'informations temporelles.

3. Procédé selon l'une quelconque de la revendication 1, **caractérisé en ce que** le procédé comprend en outre :
la détermination, par le dispositif d'émission (300, 400, 500, 610), de passer d'un état d'écoute de canal à un état de non-écoute de canal en fonction d'un résultat de mesure ; ou
la détermination, par le dispositif de transmission (300, 400, 500, 610), du passage de l'état de non-écoute de canal à l'état d'écoute de canal sur la base d'un résultat de mesure.

4. Dispositif (300, 400, 500, 610) d'écoute de canal, comprenant :
une unité de traitement (310) pour déterminer un type d'écoute de canal sur la base des informations indiquées ;
l'unité de traitement (310) étant configurée pour effectuer l'occupation de canal pour la communication New Radio sans licence, NR-U, en fonction du type d'écoute de canal ;
le dispositif étant **caractérisé en ce que** les informations d'indication sont transportées dans les informations système et les informations de commande de liaison descendante, DCI, pour l'autorisation de liaison montante.

5. Dispositif (300, 400, 500, 610) selon l'une quelconque de la revendication 4, **caractérisé en ce que** :
dans le cas où le dispositif émetteur (300, 400, 500, 610) détermine d'utiliser l'écoute de canal libre, l'unité de traitement (310) détermine en outre d'utiliser l'écoute de canal omnidirectionnelle ou l'écoute de canal directionnelle pour l'écoute de canal en fonction des informations temporelles.

6. Dispositif (300, 400, 500, 610) selon l'une quelconque de la revendication 4, **caractérisé en ce que** :
l'unité de traitement (310) est en outre configurée pour déterminer un passage de l'état d'écoute de canal à l'état de non-écoute de canal sur la base d'un résultat de mesure ; ou
l'unité de traitement (310) est en outre configurée pour déterminer le passage de l'état de non-écoute de canal à l'état d'écoute de canal sur la base d'un résultat de mesure.

7. Support de stockage lisible par ordinateur, **caractérisé en ce qu'**il est utilisé pour stocker un programme informatique, le programme informatique amenant l'ordinateur à réaliser un procédé selon l'une quelconque des revendications 1 à 3.
